# EUROPEAN PATENT SPECIFICATION

(11) **EP 4 064 439 B1**
(45) Date of publication and mention of the grant of the patent: **13.05.2026**
(21) Application number: 20957979.6
(22) Date of filing: 19.10.2020
(51) Int. Cl.: H01M 10/613, H01M 10/6552, H01M 10/6556, H01M 50/30, H01M 50/204, H01M 10/0525, H01M 10/42, H01M 50/383

(54) **BATTERY, POWER UTILIZATION DEVICE, AND METHOD AND DEVICE FOR PREPARING BATTERY**
BATTERIE, STROMVERBRAUCHSVORRICHTUNG SOWIE VERFAHREN UND VORRICHTUNG ZUR HERSTELLUNG EINER BATTERIE
BATTERIE, DISPOSITIF CONSOMMANT DE L'ÉNERGIE, ET PROCÉDÉ ET DISPOSITIF DE PRÉPARATION DE BATTERIE

(43) Date of publication of application: 28.09.2022
(73) Proprietor: Jiangsu Contemporary Amperex Technology Limited, Liyang, Jiangsu 213300 (CN)
(72) Inventor: ZHAO, Fenggang, Changzhou, Jiangsu 213300 (CN); YANG, Haiqi, Changzhou, Jiangsu 213300 (CN); HUANG, Xiaoteng, Changzhou, Jiangsu 213300 (CN); HONG, Jiarong, Changzhou, Jiangsu 213300 (CN); WANG, Wenli, Changzhou, Jiangsu 213300 (CN); HU, Langchao, Changzhou, Jiangsu 213300 (CN)
(74) Representative: Rowlands, Stuart Michael
(86) International application number: PCT/CN2020/121999
(87) International publication number: WO 2022/082396

(56) References cited:
- CN-A- 110 868 645
- CN-A- 111 509 163
- CN-A- 111 584 792
- CN-U- 207 441 811
- CN-U- 207 967 074
- CN-U- 211 088 371
- JP-A- 2012 094 313
- US-A1- 2015 287 963
- US-A1- 2017 256 764

## Description

### TECHNICAL FIELD

This application relates to the field of battery technologies, and in particular, to a battery, an electric apparatus, and a method and an apparatus for preparing battery.

### BACKGROUND

A battery is a core component of an electric apparatus driven by electrical energy, and use safety of the battery is essential to ensure overall use safety of the apparatus. However, thermal runaway of the battery is a key factor threatening the use safety of the battery.

In order to cope with a problem of thermal runaway of batteries, a pipe is typically added to a battery in the conventional technology to cool the battery in thermal runaway, to avoid spreading of the thermal runaway. However, the battery provided with the pipe is prone to a short circuit.

US2015/287963A1 relates to a cell module including a battery pack in which a plurality of electrical cells are arranged; and a bottom plate member that supports the battery pack. The bottom plate member includes an ejector for ejecting a liquid on the bottom plate member in a direction intersecting in an arrangement direction of the electrical cells and in an extending direction of the bottom plate member.

### SUMMARY

This application provides a battery, an electric apparatus, and a method and an apparatus for preparing battery, to collect a condensate resulting from a gas inside the battery condensed by the pipe to prevent the condensate from flowing in the battery and coming into contact with a charged structure to cause a short circuit in the battery.

The first aspect of this application provides a battery as set out in claim 1.

In some embodiments, the first accommodating portion is configured as a depression, and at least one end of the depression has an opening in a central axis direction of the pipe, used for releasing the condensate out of the depression through the opening.

In some embodiments, a plurality of battery cells is provided and arranged, the depression extends in an arrangement direction of the plurality of battery cells, and a plane on which the opening of the depression is located is a side surface of an outermost battery cell in the arrangement direction; or
the plane on which the opening of the depression is located is beyond the side surface of the outermost battery cell in the arrangement direction.

In some embodiments, the first accommodating portion is further configured to accommodate at least part of the pipe, so that the condensate condensed by the pipe flows into the first accommodating portion.

In some embodiments, the depression is 1 mm to 5 mm in depth.

In some embodiments, the liquid collecting member is insulative, to prevent a short circuit in the battery cell.

In some embodiments, the liquid collecting member and the pipe may be connected through bonding.

The battery cell includes a pressure relief mechanism, and the pressure relief mechanism is configured to be actuated when internal pressure or temperature of the battery cell reaches a threshold, to discharge emissions and release the internal pressure;
the pipe accommodates a fire extinguishing medium, the fire extinguishing medium passes through the pipe and condenses the gas inside the box to form the condensate, and the pipe is constructed to release the fire extinguishing medium when the pressure relief mechanism is actuated, so that the fire extinguishing medium enters the battery cell; and
the liquid collecting member includes a weak zone, where the weak zone is constructed to allow the fire extinguishing medium to penetrate through the weak zone to the battery cell when the pressure relief mechanism is actuated.

In some embodiments, the weak zone is configured as a through hole; or the weak zone is configured as a structure that is destroyed when the pressure relief mechanism is actuated to form a through hole.

In some embodiments, the weak zone is provided on a surface of the depression closer to the battery cell, so that the fire extinguishing medium and condensate collected in the depression flow through the weak zone to the battery cell.

In some embodiments, the battery further includes a fastening member, and the fastening member is provided between the battery cell and the pipe, so as to fasten the pipe to the battery cell.

In some embodiments, the fastening member further includes a plurality of buckles, where the buckle is configured to clamp the pipe, and the plurality of buckles are arranged in the central axis direction of the pipe and located on both sides of the weak zone, so as to prevent the fire extinguishing medium and condensate located between the buckles from flowing out of a zone enclosed by the buckles along the central axis direction of the pipe.

In some embodiments, the battery further includes a separator, where the separator is provided between the liquid collecting member and the pressure relief mechanism.

In some embodiments, the separator is provided with a second accommodating portion at a zone corresponding to the pressure relief mechanism, and the liquid collecting member is provided in the second accommodating portion.

A second aspect of this application provides an electric apparatus, including the battery in the foregoing embodiment, where the battery is configured to supply electrical energy.

A third aspect of this application provides a method for preparing battery of the first embodiment, including:
providing a battery cell;
providing a box, where the box is configured to accommodate the battery cell;
providing a pipe, where the pipe is configured to condense a gas inside the box to form a condensate; and
providing a liquid collecting member, where the liquid collecting member is provided between the battery cell and the pipe, the liquid collecting member is provided with a first accommodating portion facing the pipe, and the first accommodating portion is configured to collect the condensate.

In the battery of this application, the liquid collecting member is provided between the battery cell and the pipe, and the first accommodating portion is provided on the liquid collecting member, so that the condensate resulting from the gas inside the box condensed by the pipe directly flows to the first accommodating portion, instead of flowing in the battery and coming into contact with a charged structure of the battery cell, making the battery less prone to short circuit failure or electric leakage. In addition, the condensate collected in the first accommodating portion of the liquid collecting member can cool the battery when the battery is subject to thermal runaway, to delay or inhibit the propagation of thermal runaway, thereby improving the use safety performance of the battery.

### BRIEF DESCRIPTION OF DRAWINGS

To describe the technical solutions in the embodiments of this application or in the prior art more clearly, the following briefly describes the accompanying drawings for describing the embodiments or the prior art. Apparently, the accompanying drawings in the following description show some embodiments of this application, and a person of ordinary skill in the art may still derive other drawings from these accompanying drawings without creative efforts.

The drawings described herein are intended for a further understanding of this application and constitute a part of this application. Example embodiments of this application and descriptions thereof are intended to explain this application, and do not constitute any inappropriate limitation on this application.
FIG. 1-A is a schematic structural diagram of an electric apparatus according to an embodiment of this application.
FIG. 1-B is a schematic structural diagram of a battery according to an embodiment of this application.
FIG. 1-C is a schematic structural diagram of a battery module according to an embodiment of this application.
FIG. 1-D is a schematic structural diagram of a battery cell according to an embodiment of this application.
FIG. 2 is an exploded view of a battery according to an embodiment of this application.
FIG. 3 is a locally enlarged view of part A in FIG. 1.
FIG. 4 is a cross-sectional view of a battery according to an embodiment of this application.
FIG. 5 is a locally enlarged view of part B in FIG. 4.
FIG. 6 is a schematic structural diagram of a battery with a hidden pipe according to an embodiment of this application.
FIG. 7 is a locally enlarged view of part C in FIG. 6.
FIG. 8 is a process flowchart for preparing battery according to an embodiment of this application.
FIG. 9 is a schematic structural diagram of an apparatus for preparing battery according to an embodiment of this application.

Reference signs in the accompanying drawings are described as follows:
200. battery; 210. controller; 220. motor;
300. battery module; 201. first box; 202. second box;
400. battery cell; 40. housing; 30. electrode assembly; 301. tab; 10. end cover assembly; 10'. end cover plate; 302. connection member; 2. injection member; 5. electrode terminal; 6. pressure relief mechanism; 7. busbar;
100. pipe; 110. liquid collecting member; 120. depression; 130. weak zone; 140. buckle; 150. insulation component; 160. separator; 161. second accommodating portion;
401. first apparatus; 402. second apparatus; 403. third apparatus; 404. fourth apparatus.

### DESCRIPTION OF EMBODIMENTS

To make the objectives, technical solutions, and advantages of this application more comprehensible, the following describes this application in detail with reference to embodiments and accompanying drawings. It should be understood that the specific embodiments described herein are merely used to explain this application, and are preferable embodiments of this application, but are not intended to limit the scope of protection of this application. Therefore, all equivalent changes made based on the structure, shape, and principle of this application shall fall within the protection scope of this application.

Unless otherwise defined, all technical and scientific terms used herein shall have the same meanings as commonly understood by those skilled in the art to which this application belongs. The terms used in the specification of this application are merely intended to describe the specific embodiments but not intended to constitute any limitation on this application. The terms "including" and "having" and any other variations thereof in the specification, the claims and the brief description of drawings of this application are intended to cover but not exclude other content.

The term "embodiment" described herein means that specific features, structures or characteristics in combination with descriptions of the embodiments may be incorporated in at least one embodiment of this application. The word "embodiment" in various positions in the specification does not necessarily refer to a same embodiment, or an independent or alternative embodiment that is exclusive of other embodiments. Persons skilled in the art explicitly and implicitly understand that the embodiments described herein may combine with another embodiments.

The term "and/or" in this specification is only an associative relationship for describing associated objects, indicating that three relationships may exist. For example, A and/or B may indicate three scenarios: A alone; both A and B; and B alone. In addition, a character "/" in this specification generally indicates an "or" relationship between contextually associated objects.

In addition, the terms "first", "second" and the like in the specification and the claims or the above accompanying drawings of this application are used to distinguish between different objects but not describe a specific sequence, and can explicitly or implicitly include one or more features.

In the descriptions of this application, unless otherwise specified, "plurality" means more than two (including two). Likewise, "a plurality of groups" means more than two groups (including two groups).

In the descriptions of this application, it should be noted that, unless otherwise specified and defined explicitly, the terms "installed", "connected" and "connection" should be understood broadly. For example, "connected" or "connection" of a mechanical structure may indicate physical connection. For example, the physical connection may be fixed connection, for example, fixed connection by using a fastening member such as a screw, a bolt, or another fastening member; or the physical connection may be detachable connection, for example, connection by mutual clamping or clamping; or the physical connection may be an integral connection, for example, connection by welding, bonding or integral forming. "Connected" or "connection" of a circuit structure may indicate physical connection, or may indicate electrical connection or signal connection, for example, may be direct connection, that is, the physical connection, may be indirect connection by using at least one element in between as long as circuit communication is implemented, or may be communication between two elements; and the signal connection may be signal connection by using a circuit, or may be signal connection by using a media medium, such as a radio wave and Bluetooth. A person of ordinary skill in the art may understand specific meanings of the preceding terms in the embodiments of this application based on a specific situation.

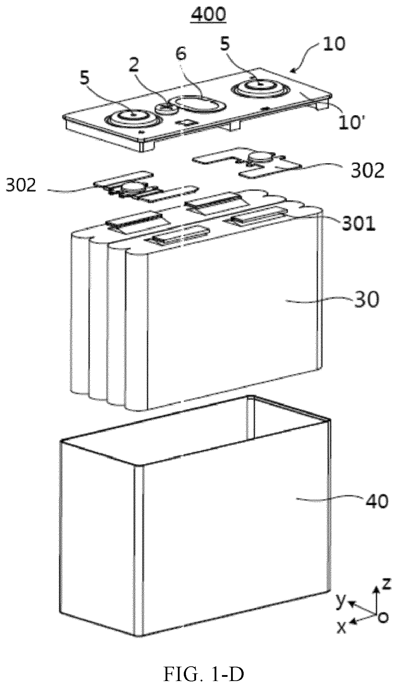

To clearly describe orientations in the following embodiments, some orientation terms may be used. for example, a coordinate system in FIG. 1-D defines various directions of a battery 200. An x direction represents a length direction of a battery cell 400; a y direction is perpendicular to the x direction in a horizontal plane and represents a width direction of the battery cell 400; a z direction is perpendicular to the x and y directions, and represents a height direction of the battery 200. Additionally, the foregoing expressions such as the x direction, y direction, and z direction that are used to indicate directions for operations and construction of components of the battery 200 in the embodiments are not absolute but rather relative. Such indications are appropriate when these components of the battery 200 are in the locations illustrated in the drawings; however, these directions should be interpreted differently when these locations change, in order to correspond to the changes.

Based on a same orientation understanding, in the descriptions of this application, the orientations or positional relationships indicated by the terms "center", "vertical", "transverse", "length", "width", "thickness", "upper", "lower", "front", "rear", "left", "right", "perpendicular", "horizontal", "top", "bottom", "inside", "outside", "clockwise", "counterclockwise", "axial", " radial", "circumferential", and the like are based on the orientations or positional relationships shown in the accompanying drawings, are merely intended to help the descriptions of this application and simplify the descriptions, are not intended to indicate or imply that the apparatuses or components mentioned in this application must have specific orientations, or be constructed and manipulated with specific orientations, and therefore shall not be construed as limitations on this application.

A rechargeable battery 200 may be referred to as a secondary battery or a traction battery. Currently, the most widely used rechargeable battery is lithium battery, such as a lithium-ion secondary battery, a lithium-ion primary battery, a lithium-sulfur battery, a sodium-lithium-ion battery, or a magnesium-ion battery, but is not limited thereto. The rechargeable battery is collectively referred to as a battery 200 in this application for convenience of description.

Safety of the battery 200 is an important characteristic for measuring the battery 200, and the safety of the battery 200 needs to be ensured as much as possible during use or charging.

The battery 200 is typically formed by connecting a plurality of battery cells 400. When the battery cell 400 experiences an external short circuit, overcharge, acupuncture, plate impact, or the like, the battery cell 400 is prone to thermal runaway. Emissions are generated inside the battery cell 400. The emissions include high-temperature flue gas (or open fires in a severe case) and volatile high-temperature electrolyte. Thermal diffusion occurs during discharge of these emissions, which may lead to thermal runaway in another battery cell 400, or even accidents such as explosions.

For the thermal runaway of the battery cell 400, an existing effective solution is to dispose a pipe 100 and fill the pipe 100 with fire extinguishing medium, so that when the thermal runaway occurs in the battery cell 400, the pipe 100 releases the fire extinguishing medium to prevent or delay explosions or fires of the battery cell 400. In addition, in some embodiments, the pipe 100 may further have a temperature adjustment function, to cool the battery 200 when temperature of the battery 200 is too high, to prevent the thermal runaway of the battery 200 due to the high temperature; and to heat the battery 200 when the internal temperature of the battery 200 is low, so that the battery 200 can operate at a suitable temperature.

The pipe 100 is typically opposite the pressure relief mechanism 6 of the battery cell 400. For example, the pipe 100 may be provided in an upper cover of the box of the battery 200 or on the battery cell 400.

The foregoing solution can prevent thermal runaway, and control the thermal runaway of the battery cell 400 in a timely manner. However, the applicant has found that the foregoing battery 200 is prone to a short circuit. To resolve the foregoing issue, the applicant has performed an insulation treatment on a part prone to short circuit inside the battery 200, but the short circuit problem persists. Through further analysis, the applicant has found that when the pipe 100 is used to solve the thermal runaway, condensate is generated when the pipe 100 is impacted by the high-temperature and high-humidity gas inside the battery 200, and the condensate flows around. The insulation treatment on the part prone to the short circuit still cannot prevent the condensate from coming into contact with another charged structure on the battery 200, and electric leakage or short circuit still occurs in the battery 200 frequently.

In view of this, this application is intended to provide a battery 200, in which a liquid collecting member 110 is provided between a battery cell 400 and a pipe 100, and a first accommodating portion is provided on the liquid collecting member 110, so that the condensate resulting from a gas condensed by the pipe 100 directly flows to the first accommodating portion, instead of flowing in the battery 200 and coming into contact with a charged structure of the battery cell 400, making the battery 200 less prone to short circuit, electric leakage, or other risks. In addition, the condensate collected in the first accommodating portion of the liquid collecting member 110 can cool the battery 200 when the battery 200 is subject to thermal runaway, to delay or inhibit the propagation of thermal runaway, thereby improving the use safety performance of the battery 200.

The battery 200 in the embodiments of this application may be applied to various electric apparatuses capable of using electrical energy as driving energy. The electric apparatus may be, but is not limited to, an electric automobile, an electric train, an electric bicycle, an electric golf cart, an unmanned aerial vehicle, a ship, or the like. In addition, the electric apparatus may be an apparatus that merely uses the battery 200 as power, or may be a hybrid electric apparatus. The battery 200 provides electrical energy for the electric apparatus, and drives the electric apparatus through a motor.

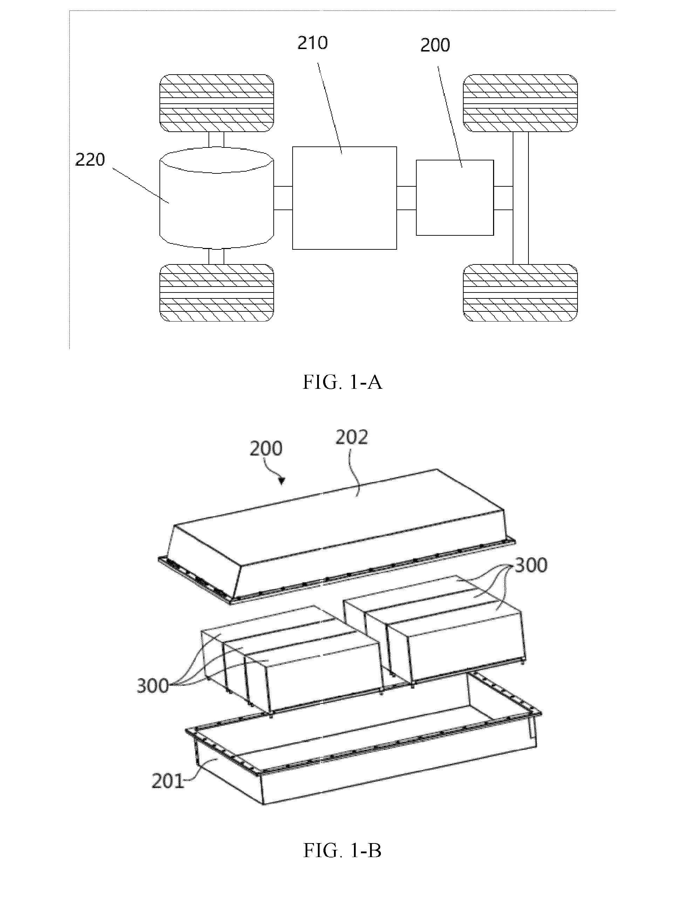

For example, FIG. 1-A is a schematic structural diagram of an electric apparatus in an embodiment of this application. The electric apparatus may be a vehicle. The vehicle may be a fossil fuel vehicle, a natural gas vehicle, or a new energy vehicle. The new energy vehicle may be a battery electric vehicle, a hybrid electric vehicle, an extended-range electric vehicle, or the like. The vehicle includes a battery 200, a controller 210, and a motor 220. The battery 200 is configured to supply power to the controller 210 and the motor 220 as an operational power supply and a driving power supply of the vehicle. For example, the battery 200 is configured to supply power to meet the start, navigation, and operation requirements of the vehicle. The battery 200 supplies power to the controller 210. The controller 210 controls the battery 200 to supply power to the motor 220. The motor 220 receives and uses the power of the battery 200 as the driving power supply of the vehicle, to replace or partially replace fuel oil or natural gas to provide driving power to the vehicle.

To achieve high performance of the battery 200 to meet use requirements, the battery 200 may include a plurality of electrically connected battery modules 300. As shown in FIG. 1-B, the battery 200 includes a box, and the box includes a first box 1, a second box 2, and a plurality of battery modules 300. The first box 1 and the second box 2 are buckled to each other, and the plurality of battery modules 300 are arranged in a space enclosed by the first box 1 and the second box 2. The first box 1 and the second box 2 may be made of aluminum, aluminum alloy or other metal materials. In some embodiments, the first box 1 and the second box 2 are sealed together.

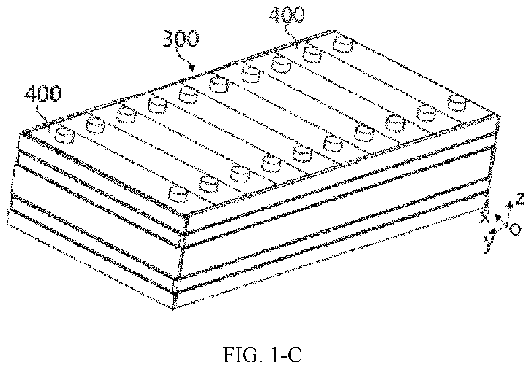

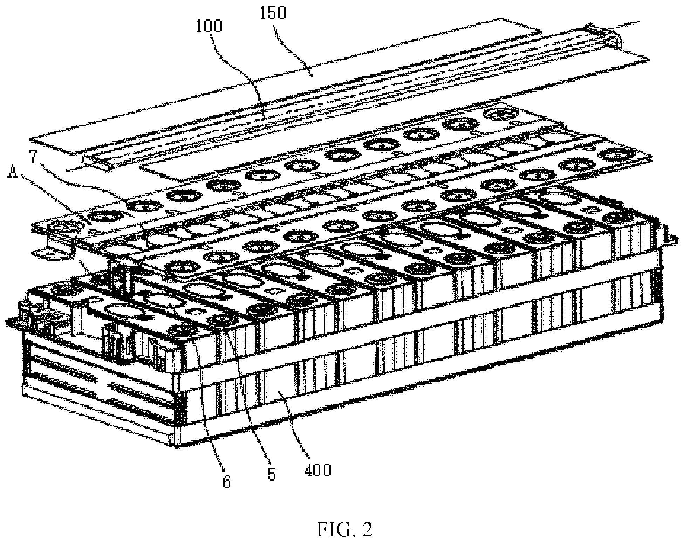

As shown in FIG. 1-C, the battery module 300 may include one or more battery cells 400. When the battery module 300 includes a plurality of battery cells 400, the plurality of battery cells 400 may be electrically connected in series, in parallel, or in hybrid connection mode to allow a large current or voltage, where the hybrid connection mode means a combination of series connection and parallel connection. A component that electrically connects the battery cells 400 is a busbar 7 (referring to FIG. 2). The busbar 7 is a conductive element that is provided between non-connected battery cells 400. The busbar 7 is connected to electrode terminals of two battery cells 400 in a predetermined connection order of the battery cells 400, so that the battery cells 400 are electrically connected. In addition, the plurality of battery cells 400 may be arranged according to a predetermined rule. As shown in FIG. 1-C, the battery cell 400 may be placed upright, a height direction of the battery cell 400 is the same as a z direction, and the plurality of battery cells 400 are arranged side by side in a y direction. Alternatively, the battery cell 400 may be placed flat, a width direction of the battery cells 400 is the same as a z direction, the plurality of battery cells 400 may be stacked in at least one layer in the z direction, and each layer includes a plurality of battery cells 400 arranged in the x direction or the y direction.

To make a person skilled in the art clearly know the improvement of this application, an overall structure of the battery cell 400 is illustrated first.

As shown in FIG. 1-D, the battery cell 400 includes a housing 40, an electrode assembly 30, and an end cover assembly 10. The end cover assembly 10 includes an end cover plate 10', and the end cover plate 10' and housing 40 are connected (for example, welded), to form an enclosure of the battery cell 400. The electrode assembly 30 is provided in the housing 40, and the housing 40 is filled with electrolyte. The battery cell 400 may be a cube, cuboid, or cylinder shape.

One or more electrode assemblies 30 may be provided based on actual usage requirements. As shown in FIG. 1-D, at least two separate wound electrode assemblies 30 may alternatively be provided in the battery 200. A body portion of the electrode assembly 30 may be formed by winding or stacking a first electrode plate, a second electrode plate, and a separator located between the first electrode plate and the second electrode plate, where the separator is an insulator sandwiched between the adjacent first electrode plate and second electrode plate. In this embodiment, for example, the first electrode plate is a positive electrode plate, and the second electrode plate is a negative electrode plate. A positive electrode active substance is applied on a coating area of the positive electrode plate, and a negative electrode active substance is applied on a coating area of the negative electrode plate. A plurality of uncoated areas extending from a coating area of the body portion are stacked as tabs 301. The electrode assembly 30 includes two tabs 301: a positive tab and a negative tab. The positive tab extends from the coating area of the positive electrode plate, and the negative tab extends from the coating area of the negative electrode plate.

The end cover assembly 10 is provided at the top of the electrode assembly 30, as shown in FIG. 1-D. The end cover assembly 10 includes an end cover plate 10' and two electrode terminals 5. The two electrode terminals 5 are a positive electrode terminal and a negative electrode terminal. Each electrode terminal 5 is provided with a connection member 302 correspondingly, where the connection member 302 is located between the end cover plate 10' and the electrode assembly 30.

For example, in FIG. 1-D, the tabs 301 of the electrode assembly 30 are located at the top of the electrode assembly 30, the positive tab is connected to the positive electrode terminal through a connection member 302, and the negative tab is connected to the negative electrode terminal through another connection member 302. It can be understood that the battery cell 400 may further include two end cover assemblies 10 that are respectively provided at two ends of the housing 40, and each end cover assembly 10 is provided with one electrode terminal 5.

The end cover plate 10' may further be provided with an explosion-proof member, to release gas in the battery cell 400 in a timely manner when excessive gas is in the battery cell 400, so as to avoid explosions.

The end cover plate 10' is provided with an exhaust hole. The exhaust hole may be provided in the middle of the end cover plate 10' in the length direction. The explosion-proof member includes a pressure relief mechanism 6. The pressure relief mechanism 6 is provided on the exhaust hole. In a normal state, the pressure relief mechanism 6 is sealed and mounted to the exhaust hole. When the battery cell 400 swells and air pressure in the enclosure rises beyond a preset value, the pressure relief mechanism 6 is opened, and the gas is discharged through the pressure relief mechanism 6.

The pressure relief mechanism 6 is a component or part that can be actuated when internal pressure or internal temperature of the battery cell 400 reaches a threshold, to release the internal pressure and/or internal substances. The pressure relief mechanism 6 may be specifically in a form of an explosion-proof valve, a gas valve, a relief valve, a safety valve, or the like, and may specifically use a pressure sensitive or temperature sensitive component or structure. To be specific, when internal pressure or temperature of the battery cell 400 reaches the threshold, the pressure relief mechanism 6 performs an action or a weak structure provided in the pressure relief mechanism 6 is destroyed, thereby forming an opening or channel for releasing the internal pressure. The threshold in this application may be a pressure threshold or a temperature threshold. The design of the threshold varies with design requirements. For example, the threshold may be designed or determined based on the internal pressure or internal temperature value of a battery cell 400 that is considered to be dangerous or at risk of being out of control. Moreover, the threshold may depend on, for example, materials used for one or more of the positive electrode plate, negative electrode plate, electrolyte, and separator in the battery cell 400.

"Actuate" mentioned in this application means that the pressure relief mechanism 6 implements an action or is activated to a given state, so that the internal pressure of the battery cell 400 can be released. The action implemented by the pressure relief mechanism 6 may include but is not limited to, for example, cracking, breaking, tearing, or opening at least part of the pressure relief mechanism 6. When the pressure relief mechanism 6 is actuated, high-pressure and high-temperature substances inside the battery cell 400 are released from an actuated part as emissions. In this way, the battery cell 400 can discharge its pressure under controllable pressure or temperature, thereby avoiding more serious potential accidents. The emissions from the battery cell 400 mentioned in this application include but are not limited to: electrolyte, fragments of positive and negative electrode plates and separator because of dissolution or breaking, high-temperature and high-pressure gas and flames generated by reactions, and the like. The high-temperature and high-pressure emissions are released toward a side of the battery cell 400 at which the pressure relief mechanism 6 is provided, and may be more specifically released toward a region where the pressure relief mechanism 6 is actuated. The strength and destructive power of such emissions are probably great, or even great enough to break one or more thin-walled structures in that direction.

In some embodiments, as shown in FIG. 1-D, the end cover plate 10' is provided with a through hole used to inject electrolyte into the battery cell 400. The through hole may be a circular hole, an elliptical hole, a polygonal hole or a hole in another shape, and can extend in a height direction of the end cover plate 10'. The end cover plate 10' is provided with an injection member 2, used to close the through hole.

In order to resolve the foregoing problem of the battery 200 during use, a specific structure of the battery 200 provided in this application is as follows:

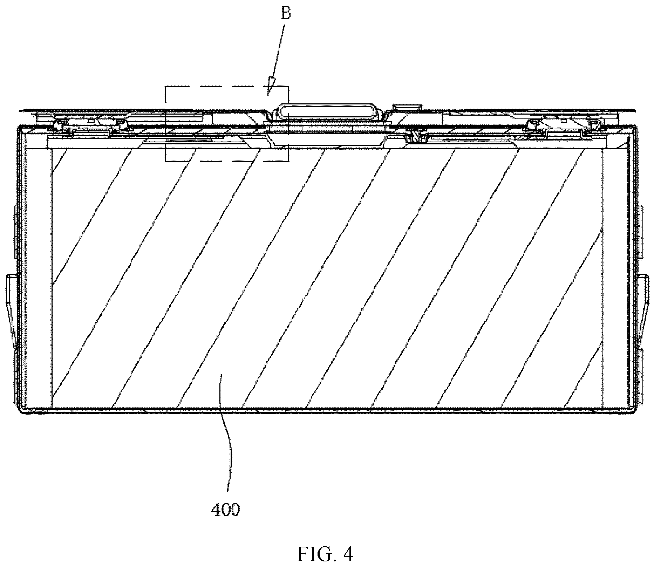

As shown in FIG. 2 and FIG. 4, the battery 200 includes: a box, a battery module 300, a pipe 100, and a liquid collecting member 110.

The box is a hollow structure, so that the battery cell 400 is sealed in the box. To clearly show structures of the liquid collecting member 110 and the pipe 100, the structure of the box is not specifically shown in the figures.

A cavity is formed in the box to accommodate the battery cell 400. The cavity can accommodate at least one battery module 300.

The battery module 300 includes one or more battery cells 400. When the battery module 300 includes a plurality of battery cells 400, the plurality of battery cells 400 may be arranged in a straight line in a thickness direction. In addition, when a plurality of battery modules 300 are provided, the plurality of battery modules 300 may be arranged in a direction perpendicular to the arrangement direction of the battery cells 400. For example, it is defined that the arrangement direction of the battery cells 400 in the same battery module 300 is a y direction, the arrangement direction of the plurality of battery modules 300 is an x direction, and an orientation of the pressure relief mechanism 6 of each battery cell 400 is a z direction. In some embodiments, the z direction may be a direction of an opening of the first box 1.

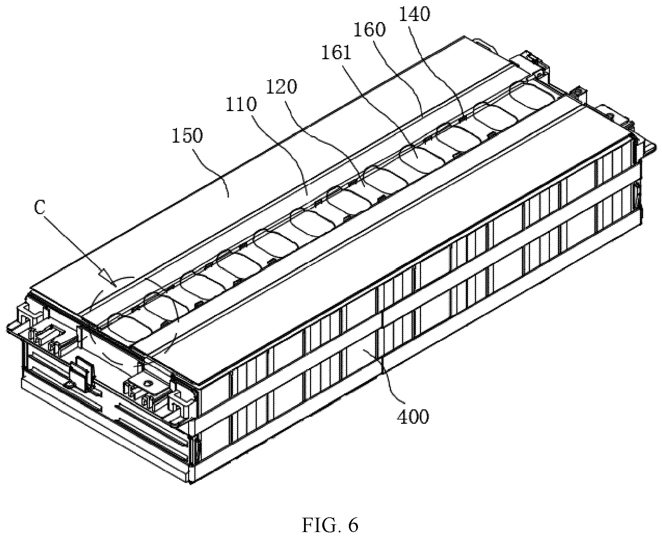

Referring to FIG. 2, FIG. 4 and FIG. 6, the pipe 100 is located on a side of the battery module 300, the pipe 100 accommodates a fire extinguishing medium, and the pipe 100 is constructed to release the fire extinguishing medium when the pressure relief mechanism 6 on any battery cell 400 is actuated, so that the fire extinguishing medium enters the battery cell 400. For example, a melting point of the pipe wall of the pipe 100 may be set lower than temperature of the emissions at the moment of thermal runaway of the battery cell 400, so that the emissions can easily melt through the pipe 100 to release the fire extinguishing medium. In some embodiments, the pipe 100 extends in the arrangement direction of the battery cells 400 in the same battery module 300, and the pipe 100 faces the pressure relief mechanism 6 on each battery cell 400, so that the pipe 100 releases the fire extinguishing medium instantaneously when the pressure relief mechanism 6 is actuated after the thermal runaway occurs in the battery cell 400, and as much fire extinguishing medium as possible can enter the battery cell 400.

The fire extinguishing medium may be a liquid fire extinguishing agent, such as water or liquid nitrogen, or may be a solid powder fire extinguishing agent, such as a dry powder fire extinguishing agent, a fluoroprotein foam fire extinguishing agent, or an aqueous film forming foam fire extinguishing agent. For example, liquid water is used as a fire extinguishing medium, because of its high specific heat capacity, low cost, low storage requirement, and capability of rapidly cooling the battery cell 400 in thermal runaway.

When the temperature of the fire extinguishing medium is lower than ambient temperature and the ambient air has a given humidity, the fire extinguishing medium passes through the pipe 100 and condenses the gas inside the box to form a condensate.

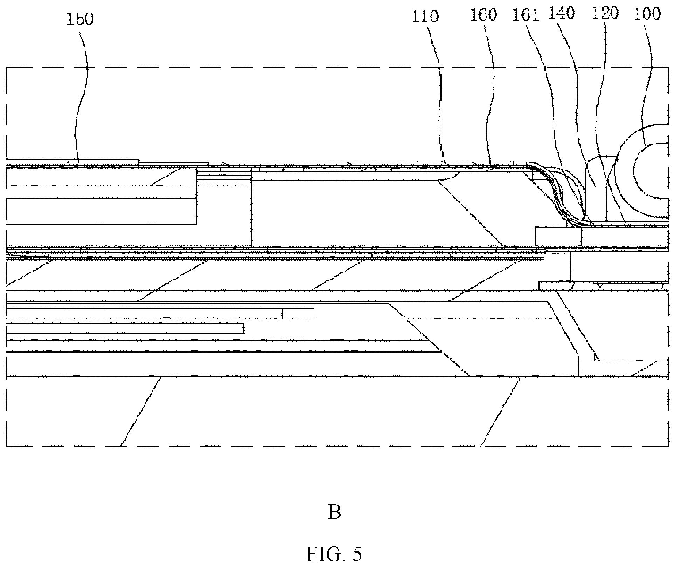

Referring to FIG. 4 and FIG. 5, in order to prevent the condensate from flowing to a charged structure (for example, the electrode terminal 5 and the connection member 302) of the battery cell 400 to cause short circuit or electric leakage of the battery 200, the liquid collecting member 110 is provided between the battery cell 400 and the pipe 100, and configured to collect the condensate condensed by the pipe 100, so as to prevent the condensate from flowing in the battery 200 and coming into contact with the charged structure, thereby avoiding the short circuit or electric leakage in the battery 200. For example, the liquid collecting member 110 may be provided in sheets, to occupy less space and increase energy density of the battery 200.

In an embodiment, the liquid collecting member 110 is insulative. This prevents the condensate from flowing around and isolates the condensate from other components, thereby preventing the liquid collecting member 110 from touching the charged structure on the battery cell 400, to avoid causing a short circuit in the battery cell 400. For example, the liquid collecting member 110 may be a light-weight heat-resistant insulation plate, such as a rockwool plate, a floating bead plate, or a vermiculite plate.

In an embodiment, the liquid collecting member 110 is provided with a first accommodating portion facing the pipe 100, and the first accommodating portion is configured to collect the condensate. For example, the first accommodating portion is configured as a depression 120 that is recessed toward a side of the battery cell 400, and the depression 120 is 1 mm to 5 mm in depth. This ensures that the depression 120 is capable of accommodating condensate, to prevent the condensate from flowing around. Due to a limited depth, the depression 120 does not occupy much space in the box, and will not increase the size of the battery. The depression 120 may be integrated with the liquid collecting member 110, or the depression 120 is connected to the liquid collecting member 110 by bonding.

The disposition of the depression 120 allows the condensate generated in the pipe 100 to drop on the liquid collecting member 110 and then flow into the depression 120, so that the depression 120 can accommodate more condensate, and the condensate can be stored in a fixed position, preventing the condensate from flowing around and coming into contact with the charged structure of the battery cell 400.

Referring to FIG. 5, in another embodiment of this application, the depression 120 is located between the pipe 100 and the pressure relief mechanism 6 on the battery cell 400. To be specific, the depression 120 is parallel to the pipe 100, the depression 120 and the pipe 100 both extend in the arrangement direction of the battery cells 400, the pipe 100 is opposite the depression 120, and the depression 120 is opposite the pressure relief mechanism 6.

In addition, referring to FIG. 5, the first accommodating portion is further configured to accommodate at least part of the pipe 100, that is, the pipe 100 may be entirely located in the depression 120; or may be partially located in the first accommodating portion, and partially located outside the depression 120, as long as the condensate in the pipe 100 can flow directly into the first accommodating portion, so as to better collect the condensate.

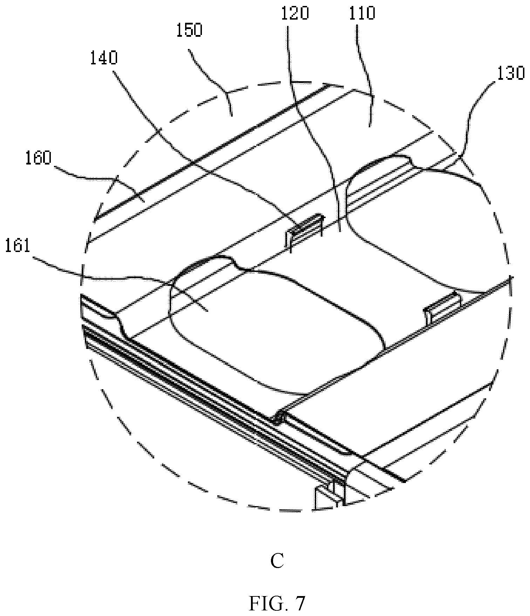

Referring to FIG. 2, FIG. 6, and FIG. 7, at least one end of the depression 120 has an opening in a central axis direction of the pipe 100, and a plane on which the opening of the depression 120 is located is an outer side surface of an outermost battery cell 400 in the arrangement direction of the battery cells 400. Alternatively, the plane on which the opening of the depression 120 is located is beyond the side surface of the outermost battery cell 400 in the arrangement direction of the battery cells 400. For example, for an electric vehicle as an electric apparatus, when headed uphill or downhill, or driving at different heights on both sides, or bumping, or experiencing a change in driving speed, under action of inertia, the opening allows the condensate to be released out of the depression 120 through the opening, but not released to the battery cell 400, so as to ensure the use safety of the battery 200 and prevent the battery 200 from a short circuit or electric leakage.

After being released along the opening of the depression, the condensate flows to the bottom of the first box 1 for gathering. The first box 1 is provided with a liquid level control mechanism for controlling the condensate level, to release the condensate in the first box 1 when the liquid level in the first box 1 reaches a given height, so as to prevent the condensate from coming into contact with the charged structure at the top of the battery cell 400 to cause a short circuit. Moreover, when the liquid level in the first box 1 does not reach the given height, the condensate can continue to accumulate, so as to reduce the temperature in the box, and implement fire fighting and cooling in the case of battery thermal runaway.

For example, in some embodiments, the liquid level control mechanism may be one or more through holes provided in a side wall of the first box 1, and the through hole is at a given height from the bottom wall of the first box 1, so that when the condensate liquid level in the first box 1 reaches or exceeds the level of the through hole, the condensate is released from the through hole, to prevent the liquid level from rising further and prevent the condensate from coming into contact with the charged structure on the battery cell 400 to cause a short circuit.

In some embodiments, the liquid level control mechanism may alternatively be a pressure valve provided on the side wall or bottom wall of the first box 1. The pressure valve may be a check valve, that is, only allowing liquid to flow out of the first box 1, but prohibiting liquid from flowing into the first box 1. The check valve may specifically adopt a pressure sensitive element or similar structure, and a pressure threshold is set. To be specific, when the hydraulic pressure at a height corresponding to the check valve reaches a predetermined threshold, an opening or channel is formed on the check valve for the liquid to flow out, so that the condensate is released. This can prevent the liquid level of the condensate in the first box 1 from rising, thereby preventing the condensate from coming into contact with the charged structure on the battery cell 400 to cause a short circuit.

When the battery module 300 is provided in plurality, the liquid collecting member 110 above different battery modules 300 may be provided separately. To be specific, each battery module 300 corresponds to one liquid collecting member 110, the liquid collecting member 110 is provided with a first accommodating portion in the arrangement direction of the battery cells 400, and the liquid collecting members 110 above different battery modules 300 are separated from each other to reduce costs. Certainly, the liquid collecting member 110 above different battery modules 300 may alternatively be provided as a whole. To be specific, one liquid collecting member 110 covers a plurality of battery modules 300, and a first accommodating portion is provided at a position corresponding to the pipe 100 above each battery module 300.

Referring to FIG. 2 to FIG. 7, when the liquid collecting members 110 above different battery modules 300 are separately provided, in order to prevent the condensate in the first accommodating portion from flowing from the first accommodating portion to the busbar 7 that is not covered by the liquid collecting members 110 when the vehicle is shaking, the insulation component 150 may cover the busbar 7. The insulation component 150 may cover only one busbar 7 or a plurality of busbars 7 simultaneously. For example, the busbar 7 on a plurality of battery cells 400 of one battery module 300 may be covered, to prevent the condensate from flowing to the busbar 7 to cause a short circuit or electric leakage.

Referring to FIG. 2, when thermal runaway occurs, to allow the emissions to quickly pass through the liquid collecting member 110 and destroy the pipe 100, the liquid collecting member 110 further includes a weak zone 130. The weak zone 130 is provided on the depression 120 and opposite the pressure relief mechanism 6, so that the liquid collecting member 110 can be penetrated by the emissions instantaneously when thermal runaway occurs in the battery cell 400 and the pressure relief mechanism 6 is actuated, and the emissions further destroys a wall of the pipe 100 to release the fire extinguishing medium in the pipe 100 rapidly. After being released, the fire extinguishing medium penetrates through the destroyed wall of the pipe 100 and weak zone 130 to the battery cell 400, to rapidly implement fire fighting and cooling.

In addition, when the pressure relief mechanism 6 is actuated, the condensate collected in the depression 120 may also flow from the destroyed pipe wall to the weak zone 130, and flow into the battery cell 400 through the pressure relief mechanism 6, so as to implement fire fighting and cooling as a supplement to the fire extinguishing agent.

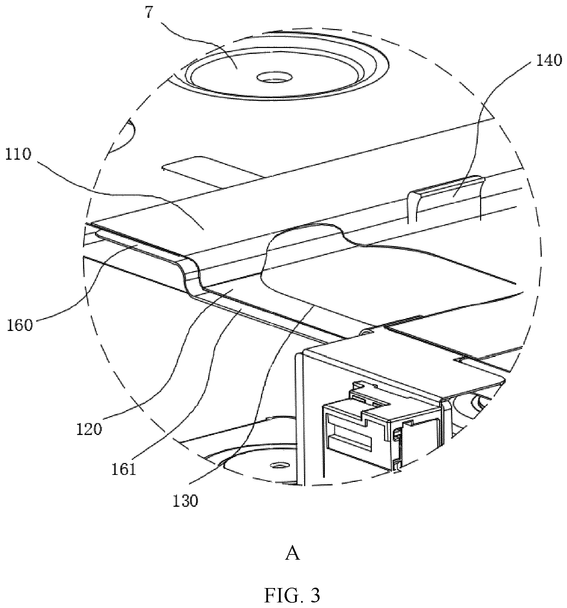

Referring to FIG. 3 and FIG. 5, in an embodiment of this application, the weak zone 130 is constructed as a through hole, and the through hole is opposite the pressure relief mechanism 6. In this case, in order to prevent the condensate collected in the depression 120 from flowing through the hole to the electrode terminal 5, the pipe 100 may cover an edge of the through hole and tightly abut against the liquid collecting member 110. In this way, when the battery 200 is operating properly, the condensate can be stored in the depression 120, other than flowing to the electrode terminal 5 through the edge of the through hole; when thermal runaway occurs in the battery, the pipe 100 is broken by the pressure relief mechanism 6, and the condensate flows through the through hole to the battery cell 400 in thermal runaway to lower the temperature. It can be understood that the edge of the through hole may alternatively be directly bonded to the pressure relief mechanism 6, so that the condensate does not flow out from the edge of the through hole, but all flows into the battery cell 400 through the pressure relief mechanism 6. The foregoing arrangement not only prevents the condensate from coming into contact with the charged structure on the battery cell 400 through the through hole, for example, coming into contact with the electrode terminal 5, but also enables all condensate accumulated in the depression 120 to flow into the battery cell 400 through the pressure relief mechanism 6, to solve the problem of thermal runaway.

When thermal runaway occurs in the battery 200, the pressure relief mechanism 6 is actuated, so that the emissions in the battery cell 400 are released from the pressure relief mechanism 6. The emissions directly penetrate through the through hole, melt through a wall of the pipe 100 that is opposite the pressure relief mechanism 6, to form an opening, so that the fire extinguishing medium can be released through the opening and the through hole. In this case, the emissions directly come in contact with the pipeline 100 after being released from the pressure relief mechanism 6, so that the pipeline 100 can be destroyed more quickly and directly, greatly speeding up fire fighting and preventing explosions caused by heat accumulation in the box.

In another embodiment, the weak zone 130 is configured as a structure that is destroyed when the pressure relief mechanism 6 is actuated to form a through hole. For example, the liquid collecting member 110, or the depression 120, or at least a part of the liquid collecting member opposite the pressure relief mechanism 6, may be configured as a structure that is easily destroyed by the emissions. The "destroy" form herein may include but is not limited to one of penetrating, cracking, breaking, and tearing. In this embodiment of this application, the part of the liquid collecting member 110 opposite the pressure relief mechanism 6 is constructed as a weak structure or a low-melting-point structure that is vulnerable to melting through by the high-temperature and high-pressure emissions generated in the battery cell 400. In this way, when the high-temperature and high-pressure emissions are released from the pressure relief mechanism 6, the emissions quickly melt through the liquid collecting member 110, and the wall of the pipe 100 that is opposite the pressure relief mechanism 6 is destroyed to form an opening to release the fire extinguishing medium in the pipe 100. The fire extinguishing medium enters the interior of the battery cell 400 through the pressure relief mechanism 6, so as to implement fire fighting and cooling treatment for the battery cell 400 in thermal runaway.

When only the part of the liquid collecting member 110 that is opposite the pressure relief mechanism 6 is constructed as the weak zone 130, the structure of the weak zone 130 may be as follows: the strength of the weak zone 130 is less than the strength of the rest part of the liquid collecting member 110, for example, the thickness of the weak zone 130 is less than the thickness of the rest part of the liquid collecting member 110.

Alternatively, the weak zone 130 may be constructed as a low-melting-point structure, for example, the melting point of the weak zone 130 is lower than the melting point of the rest part of the liquid collecting member 110.

Alternatively, the weak zone 130 may be constructed as a sheet-like structure connected to the rest part of the liquid collecting member 110 by an easy tear line, so as to be easily broken by the emissions released by the pressure relief mechanism 6.

The "easy tear line" mentioned in this embodiment of this application is a discontinuous scribe line formed by intermittent destruction between a part that needs to be torn and a part that does not need to be torn by using an external force. A destroyed part of a material is light, thin, but impenetrable, and may be cracked under a small external force, and an undestroyed part of material partially retains a thickness of the original material. Such line formed by intermittent destruction is called easy tear line. The easy tear line may be formed by using a laser punching machine, a laser marking machine, a laser scribing machine, or a laser cutting machine.

In an embodiment, the pipe 100 and the liquid collecting member 110 may be connected in a bonding manner, that is, the pipe 100 is fastened to the liquid collecting member 110 directly by using a sticky substance.

Referring to FIG. 5, in another embodiment of this application, the battery 200 further includes a fastening member, and the fastening member is provided between the battery cell 400 and the pipe 100, so as to clamp the pipe 100, thereby fixing the position of the pipe 100. The fastening member in this embodiment includes a plurality of buckles 140. The buckle 140 is configured to clamp the pipe 100. The buckle 140 may be made of an elastic material, for example, rubber, silicone, plastic, or elastic metal, so as to facilitate the clamping of the pipe 100 and clamp the pipe 100 tightly. The fastening member is fixedly connected to the electrode terminal 5 through bonding, clamping, or the like. The plurality of buckles 140 are arranged in the central axis direction of the pipe 100. For example, the buckles 140 may be located on both sides of the weak zone 130, so as to prevent the fire extinguishing agent and the condensate located between the buckles 140 from flowing out of a zone enclosed by the buckles 140 at the depression 120 along the central axis direction of the pipe 100, when the fire extinguishing agent is released from the pipe 100.

In another embodiment of this application, the pipe 100 may alternatively be fastened jointly by clamping of the buckle 140 and bonding. The structure, fastening method, and arrangement of the buckles 140 in this embodiment are the same as those in the foregoing embodiment of this application. With joint action of the bonding and the clamping of the buckle 140, connection between the pipe 100 and the liquid collecting member 110 is stronger, thereby preventing the pipe 100 from shaking to cause the generated condensate to flow around.

Referring to FIG. 3, the battery 200 further includes an separator 160, the separator 160 is provided between the liquid collecting member 110 and the pressure relief mechanism 6, the separator 160 is provided with a second accommodating portion 161 at a zone corresponding to the pressure relief mechanism 6, and the liquid collecting member 110 is provided in the second accommodating portion 161. Specifically, the first accommodating portion is located in the second accommodating portion 161, so that when the condensate flows out from a weak part of the liquid collecting member 110, the outflowing condensate is collected again. This further protects the battery cell 400, prevents the condensate from coming into contact with the charged structure, and further improves use safety and reliability of the battery 200.

In conclusion, in the battery 200 of this application, the liquid collecting member 110 is provided between the battery cell 400 and the pipe 100, and the first accommodating portion is provided on the liquid collecting member 110, so that the condensate, generated by the gas in the box 20 coming into contact with the pipe 100 at a low temperature, can directly flow into the first accommodating portion, instead of flowing to the charged structure on the battery cell 400, making the battery 200 less prone to short circuit failure, and achieving higher stability and safety of the battery 200.

Because the battery 200 of this application has the foregoing characteristics, an electric apparatus using the battery 200 of this application for electrical energy has a higher use stability, and is not prone to safety accidents caused by internal short circuit and leakage of the battery 200.

In addition, this application further provides a preparation method of battery 200, used for preparing the foregoing battery 200 in this application.

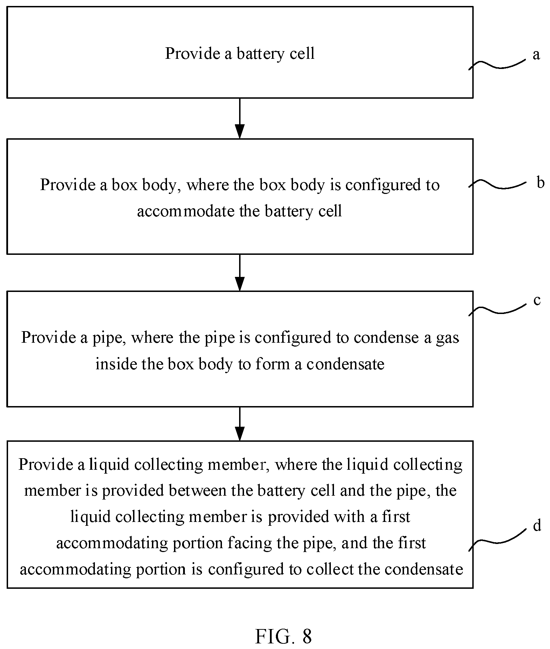

Referring to FIG. 8, in an embodiment of this application, the method for preparing battery 200 includes the following steps.

Step a: Provide a battery cell 400.

Step b: Provide a box, where the box is configured to accommodate the battery cell 400.

Step c: Provide a pipe 100, where the pipe 100 is configured to condense a gas inside the box to form a condensate.

Step d: Provide a liquid collecting member 110, where the liquid collecting member 110 is provided between the battery cell 400 and the pipe 100, the liquid collecting member 110 is provided with a first accommodating portion facing the pipe 100, and the first accommodating portion is configured to collect the condensate.

The foregoing steps may not be completely carried out in the foregoing arrangement order. In an actual manufacturing process of the battery 200, the order of the foregoing steps may be adjusted based on actual situation, or performed simultaneously, or other steps may be added to manufacture another component of the battery 200, so as to finally obtain the required battery 200. Reference may be made to the embodiments of the battery 200.

In addition, any method that can manufacture related components and connect related components shall fall within the protection scope of the embodiments of this application. Details are not described herein.

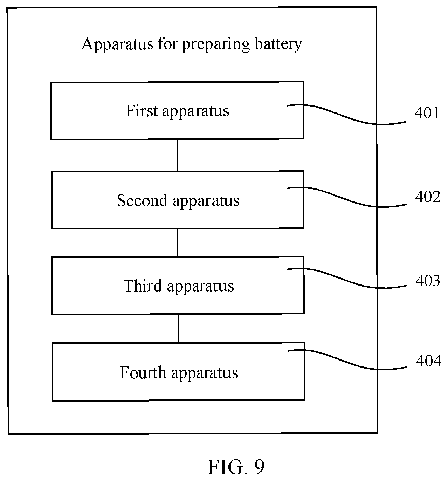

Finally, referring to FIG. 9, an unclaimed example provides an apparatus for preparing battery 200, including: a first apparatus 401, a second apparatus 402, a third apparatus 403, and a fourth apparatus 404.

The first apparatus 401 is configured to provide a battery cell 400.

The second apparatus 402 is configured to provide a box, where the box is configured to accommodate the battery cell 400.

The third apparatus 403 is configured to provide a pipe 100, where the pipe 100 is configured to condense a gas inside the box to form a condensate.

The fourth apparatus 404 is configured to provide a liquid collecting member 110, where the liquid collecting member 110 is provided between the battery cell 400 and the pipe 100, the liquid collecting member 110 is provided with a first accommodating portion facing the pipe 100, and the first accommodating portion is configured to collect the condensate.

Specific functions and details of the foregoing apparatuses for preparing battery 200 have been described in corresponding embodiments of the battery 200 in detail. Details are not described herein again.

The foregoing protection topics and features of the embodiments of this application may be used for mutual reference. If the structure permits, persons skilled in the art can further flexibly combine the technical features in different embodiments to form more embodiments.

The foregoing describes the battery 200, electric apparatus, and method and apparatus for preparing battery 200 provided in this application. In this specification, specific embodiments are used to describe the principle and implementations of this application. The description of the embodiments is only intended to help understand the method and core idea of this application. It should be noted that the scope of protection is defined by the appended claims.

## Claims

1. A battery (200), comprising:
a battery cell (400) that comprises a pressure relief mechanism (6), and the pressure relief mechanism (6) is configured to be actuated when internal pressure or temperature of the battery cell (400) reaches a threshold, to discharge emissions and release the internal pressure;
a box (201, 202), configured to accommodate the battery cell (400);
a pipe (100), configured to condense a gas inside the box (201, 202) to form a condensate, wherein the pipe (100) accommodates a fire extinguishing medium, wherein the fire extinguishing medium passes through the pipe (100) and condenses the gas inside the box (201, 202) to form the condensate, and the pipe (100) is constructed to release the fire extinguishing medium when the pressure relief mechanism (6) is actuated, so that the fire extinguishing medium enters the battery cell (400); and
a liquid collecting member (110), provided between the battery cell (400) and the pipe (100), and comprising a weak zone (130) constructed to allow the fire extinguishing medium to penetrate through the weak zone (130) to the battery cell (400) when the pressure relief mechanism (6) is actuated, wherein the liquid collecting member (110) is provided with a first accommodating portion facing the pipe (100), and the first accommodating portion is configured to collect the condensate.

2. The battery (200) according to claim 1, wherein the first accommodating portion is configured as a depression (120), and at least one end of the depression (120) has an opening in central axis direction of the pipe (100), used for releasing the condensate out of the depression (120) through the opening.

3. The battery (200) according to claim 2, wherein a plurality of battery cells (400) is provided and arranged, the depression (120) extends in an arrangement direction of the plurality of battery cells (400), and a plane on which the opening of the depression (120) is located is a side surface of an outermost battery cell (400) in the arrangement direction of the battery cells (400); or
the plane on which the opening of the depression (120) is located is beyond the side surface of the outermost battery cell (400) in the arrangement direction.

4. The battery (200) according to any one of claims 1 to 3, wherein the first accommodating portion is further configured to accommodate at least part of the pipe (100), so that the condensate condensed by the pipe (100) flows to the first accommodating portion.

5. The battery (200) according to any one of claims 2 to 4, wherein the depression (120) is 1 mm to 5 mm in depth.

6. The battery (200) according to any one of claims 1 to 5, wherein the liquid collecting member (110) is insulative, to prevent a short circuit in the battery cell (400).

7. The battery (200) according to any one of claims 1 to 6, wherein the liquid collecting member (110) and the pipe (100) are connected in a bonding manner.

8. The battery (200) according to any one of claims 1 to 7, wherein the weak zone (130) is configured as a through hole; or the weak zone (130) is configured as a structure that is destroyed when the pressure relief mechanism (6) is actuated to form a through hole.

9. The battery (200) according to claim 1 or 8, wherein the weak zone (130) is provided on a surface of the depression (120) closer to the battery cell (400), so that the fire extinguishing medium and the condensate collected in the depression (120) flow through the weak zone (130) to the battery cell (400).

10. The battery (200) according to claim 9, wherein the battery (200) further comprises a fastening member, and the fastening member is provided between the battery cell (400) and the pipe (100), so as to fasten the pipe (100) to the battery cell (400).

11. The battery (200) according to claim 10, wherein the fastening member further comprises a plurality of buckles (140), the buckle (140) is configured to clamp the pipe (100), and the plurality of buckles (140) are arranged in the central axis direction of the pipe (100) and located on both sides of the weak zone (130), so as to prevent the fire extinguishing medium and condensate located between the buckles (140) from flowing out of a zone enclosed by the buckles (140) at the depression (120) along the central axis direction of the pipe (100).

12. The battery (200) according to any one of claims 8 to 10, wherein the battery (200) further comprises a separator (160), and the separator (160) is provided between the liquid collecting member (110) and the pressure relief mechanism (6).

13. The battery (200) according to claim 12, wherein the separator (160) is preferably provided with a second accommodating portion (161) at a zone corresponding to the pressure relief mechanism (6), and the liquid collecting member (110) is provided in the second accommodating portion (161).

14. An electric apparatus, comprising the battery (200) according to any one of claims 1 to 13, wherein the battery (200) is configured to supply electrical energy.

15. A method for preparing the battery of any of claims 1 to 13, comprising:
providing a battery cell (400);
providing a box (201, 202), wherein the box (201, 202) is configured to accommodate the battery cell (400);
providing a pipe (100), wherein the pipe (100) is configured to condense a gas inside the box to form a condensate; and
providing a liquid collecting member (110), wherein the liquid collecting member (110) is provided between the battery cell (400) and the pipe (100), the liquid collecting member (110) is provided with a first accommodating portion facing the pipe (100), and the first accommodating portion is configured to collect the condensate.

## Patentansprüche

1. Batterie (200), umfassend:
eine Batteriezelle (400), die einen Druckentlastungsmechanismus (6) umfasst, und der Druckentlastungsmechanismus (6) konfiguriert ist, um betätigt zu werden, wenn ein Innendruck oder eine Innentemperatur der Batteriezelle (400) einen Schwellenwert erreicht, um Emissionen abzuführen und den Innendruck abzulassen;
einen Kasten (201, 202), der konfiguriert ist, um die Batteriezelle (400) aufzunehmen;
ein Rohr (100), das konfiguriert ist, um ein Gas innerhalb des Kastens (201, 202) zu kondensieren, um ein Kondensat zu bilden, wobei das Rohr (100) ein Feuerlöschmedium aufnimmt, wobei das Feuerlöschmedium durch das Rohr (100) hindurchgeht und das Gas innerhalb des Kastens (201, 202) kondensiert, um das Kondensat zu bilden, und das Rohr (100) so konstruiert ist, dass es das Feuerlöschmedium freigibt, wenn der Druckentlastungsmechanismus (6) betätigt wird, so dass das Feuerlöschmedium in die Batteriezelle (400) eintritt; und
ein Flüssigkeitssammelelement (110), das zwischen der Batteriezelle (400) und dem Rohr (100) bereitgestellt ist und eine Schwächezone (130) umfasst, die so konstruiert ist, dass sie es dem Feuerlöschmedium ermöglicht, durch die Schwächezone (130) zur Batteriezelle (400) zu dringen, wenn der Druckentlastungsmechanismus (6) betätigt wird, wobei das Flüssigkeitssammelelement (110) mit einem ersten aufnehmenden Abschnitt versehen ist, der dem Rohr (100) zugewandt ist, und der erste aufnehmende Abschnitt konfiguriert ist, um das Kondensat zu sammeln.

2. Batterie (200) nach Anspruch 1, wobei der erste aufnehmende Abschnitt als eine Vertiefung (120) konfiguriert ist, und mindestens ein Ende der Vertiefung (120) eine Öffnung in Mittelachsenrichtung des Rohrs (100) aufweist, die zum Ablassen des Kondensats aus der Vertiefung (120) durch die Öffnung verwendet wird.

3. Batterie (200) nach Anspruch 2, wobei eine Vielzahl von Batteriezellen (400) bereitgestellt und angeordnet ist, die Vertiefung (120) sich in einer Anordnungsrichtung der Vielzahl von Batteriezellen (400) erstreckt, und eine Ebene, auf der sich die Öffnung der Vertiefung (120) befindet, eine Seitenoberfläche einer äußersten Batteriezelle (400) in der Anordnungsrichtung der Batteriezellen (400) ist; oder
die Ebene, auf der sich die Öffnung der Vertiefung (120) befindet, jenseits der Seitenoberfläche der äußersten Batteriezelle (400) in der Anordnungsrichtung liegt.

4. Batterie (200) nach einem der Ansprüche 1 bis 3, wobei der erste aufnehmende Abschnitt ferner konfiguriert ist, um mindestens einen Teil des Rohrs (100) aufzunehmen, so dass das von dem Rohr (100) kondensierte Kondensat zu dem ersten aufnehmenden Abschnitt fließt.

5. Batterie (200) nach einem der Ansprüche 2 bis 4, wobei die Vertiefung (120) 1 mm bis 5 mm tief ist.

6. Batterie (200) nach einem der Ansprüche 1 bis 5, wobei das Flüssigkeitssammelelement (110) isolierend ist, um einen Kurzschluss in der Batteriezelle (400) zu verhindern.

7. Batterie (200) nach einem der Ansprüche 1 bis 6, wobei das Flüssigkeitssammelelement (110) und das Rohr (100) klebend verbunden sind.

8. Batterie (200) nach einem der Ansprüche 1 bis 7, wobei die Schwächezone (130) als ein Durchgangsloch konfiguriert ist, oder die Schwächezone (130) als eine Struktur konfiguriert ist, die zerstört wird, wenn der Druckentlastungsmechanismus (6) betätigt wird, um ein Durchgangsloch zu bilden.

9. Batterie (200) nach Anspruch 1 oder 8, wobei die Schwächezone (130) auf einer Oberfläche der Vertiefung (120) näher an der Batteriezelle (400) bereitgestellt ist, so dass das Feuerlöschmedium und das in der Vertiefung (120) gesammelte Kondensat durch die Schwächezone (130) zur Batteriezelle (400) fließen.

10. Batterie (200) nach Anspruch 9, wobei die Batterie (200) ferner ein Befestigungselement umfasst, und das Befestigungselement zwischen der Batteriezelle (400) und dem Rohr (100) bereitgestellt ist, um das Rohr (100) an der Batteriezelle (400) zu befestigen.

11. Batterie (200) nach Anspruch 10, wobei das Befestigungselement ferner eine Vielzahl von Schnallen (140) umfasst, wobei die Schnalle (140) konfiguriert ist, um das Rohr (100) zu klemmen, und wobei die Vielzahl von Schnallen (140) in der Mittelachsenrichtung des Rohrs (100) angeordnet sind und sich auf beiden Seiten der Schwächezone (130) befinden, um zu verhindern, dass das Feuerlöschmedium und das zwischen den Schnallen (140) befindliche Kondensat aus einer von den Schnallen (140) eingeschlossenen Zone an der Vertiefung (120) entlang der Mittelachsenrichtung des Rohrs (100) herausfließen.

12. Batterie (200) nach einem der Ansprüche 8 bis 10, wobei die Batterie (200) ferner einen Separator (160) umfasst, und der Separator (160) zwischen dem Flüssigkeitssammelelement (110) und dem Druckentlastungsmechanismus (6) bereitgestellt ist.

13. Batterie (200) nach Anspruch 12, wobei der Separator (160) vorzugsweise mit einem zweiten aufnehmenden Abschnitt (161) in einer Zone versehen ist, die dem Druckentlastungsmechanismus (6) entspricht, und das Flüssigkeitssammelelement (110) in dem zweiten aufnehmenden Abschnitt (161) bereitgestellt ist.

14. Elektrische Einrichtung, umfassend die Batterie (200) nach einem der Ansprüche 1 bis 13, wobei die Batterie (200) konfiguriert ist, um elektrische Energie zu liefern.

15. Verfahren zum Herstellen des Batterie nach einem der Ansprüche 1 bis 13, umfassend:
Bereitstellen einer Batteriezelle (400);
Bereitstellen eines Kastens (201, 202), wobei der Kasten (201, 202) konfiguriert ist, um die Batteriezelle (400) aufzunehmen;
Bereitstellen eines Rohrs (100), wobei das Rohr (100) konfiguriert ist, um ein Gas innerhalb des Kastens zu kondensieren, um ein Kondensat zu bilden; und
Bereitstellen eines Flüssigkeitssammelelements (110), wobei das Flüssigkeitssammelelement (110) zwischen der Batteriezelle (400) und dem Rohr (100) bereitgestellt ist, das Flüssigkeitssammelelement (110) mit einem ersten aufnehmenden Abschnitt versehen ist, der dem Rohr (100) zugewandt ist, und der erste aufnehmende Abschnitt konfiguriert ist, um das Kondensat zu sammeln.

## Revendications

1. Batterie (200), comprenant :
une cellule de batterie (400) qui comprend un mécanisme de libération de pression (6), et le mécanisme de libération de pression (6) est conçu pour être actionné lorsqu'une pression ou une température interne de la cellule de batterie (400) atteint un seuil, afin d'évacuer des émissions et de libérer la pression interne ;
une boîte (201, 202), conçue pour recevoir la cellule de batterie (400) ;
un tuyau (100), conçu pour condenser un gaz à l'intérieur de la boîte (201, 202) pour former un condensat, le tuyau (100) recevant un fluide d'extinction de feu, le fluide d'extinction de feu passant à travers le tuyau (100) et condensant le gaz à l'intérieur de la boîte (201, 202) pour former le condensat, et le tuyau (100) étant construit de sorte à libérer le fluide d'extinction de feu quand le mécanisme de libération de pression (6) est actionné, de telle sorte que le fluide d'extinction de feu entre dans la cellule de batterie (400) ; et
un élément de collecte de liquide (110), disposé entre la cellule de batterie (400) et le tuyau (100), et comprenant une zone faible (130) construite de sorte à permettre que le fluide d'extinction de feu pénètre à travers la zone faible (130) vers la cellule de batterie (400) quand le mécanisme de libération de pression (6) est actionné, l'élément de collecte de liquide (110) étant pourvu d'une première partie de réception qui fait face au tuyau (100), et la première partie de réception étant conçue pour collecter le condensat.

2. Batterie (200) selon la revendication 1, dans laquelle la première partie de réception est conçue sous la forme d'une dépression (120), et au moins une extrémité de la dépression (120) a une ouverture dans la direction d'axe central du tuyau (100), utilisée pour évacuer le condensat hors de la dépression (120) à travers l'ouverture.

3. Batterie (200) selon la revendication 2, dans laquelle une pluralité de cellules de batterie (400) sont disposées et agencées, la dépression (120) s'étend dans une direction d'agencement de la pluralité de cellules de batterie (400), et un plan sur lequel l'ouverture de la dépression (120) se situe est une surface latérale d'une cellule de batterie (400) la plus à l'extérieur dans la direction d'agencement des cellules de batterie (400) ; ou
le plan sur lequel l'ouverture de la dépression (120) se situe est au-delà de la surface latérale de la cellule de batterie (400) la plus à l'extérieur dans la direction d'agencement.

4. Batterie (200) selon l'une quelconque des revendications 1 à 3, dans laquelle la première partie de réception est en outre conçue pour recevoir au moins une partie du tuyau (100), de telle sorte que le condensat condensé par le tuyau (100) s'écoule vers la première partie de réception.

5. Batterie (200) selon l'une quelconque des revendications 2 à 4, dans laquelle la profondeur de la dépression (120) est de 1 mm à 5 mm.

6. Batterie (200) selon l'une quelconque des revendications 1 à 5, dans laquelle l'élément de collecte de liquide (110) est isolant, afin d'éviter un court-circuit dans la cellule de batterie (400).

7. Batterie (200) selon l'une quelconque des revendications 1 à 6, dans laquelle l'élément de collecte de liquide (110) et le tuyau (100) sont raccordés de manière à être liés.

8. Batterie (200) selon l'une quelconque des revendications 1 à 7, dans laquelle la zone faible (130) est conçue comme un trou traversant ; ou la zone faible (130) est conçue comme une structure qui est détruite quand le mécanisme de libération de pression (6) est actionné pour former un trou traversant.

9. Batterie (200) selon la revendication 1 ou 8, dans laquelle la zone faible (130) est fournie sur une surface de la dépression (120) plus proche de la cellule de batterie (400), de telle sorte que le fluide d'extinction de feu et le condensat collectés dans la dépression (120) s'écoulent à travers la zone faible (130) vers la cellule de batterie (400).

10. Batterie (200) selon la revendication 9, dans laquelle la batterie (200) comprend en outre un élément de fixation, et l'élément de fixation est fourni entre la cellule de batterie (400) et le tuyau (100), de sorte à fixer le tuyau (100) à la cellule de batterie (400).

11. Batterie (200) selon la revendication 10, dans laquelle l'élément de fixation comprend en outre une pluralité de boucles (140), la boucle (140) est conçue pour serrer le tuyau (100), et la pluralité de boucles (140) sont agencées dans la direction d'axe central du tuyau (100) et situées de part et d'autre de la zone faible (130), de sorte à empêcher que le fluide d'extinction de feu et le condensat situé entre les boucles (140) s'écoulent hors d'une zone entourée par les boucles (140) au niveau de la dépression (120) le long de la direction d'axe central du tuyau (100).

12. Batterie (200) selon l'une quelconque des revendications 8 à 10, dans laquelle la batterie (200) comprend en outre un séparateur (160), et le séparateur (160) est fourni entre l'élément de collecte de liquide (110) et le mécanisme de libération de pression (6).

13. Batterie (200) selon la revendication 12, dans laquelle le séparateur (160) est de préférence pourvu d'une deuxième partie de réception (161) au niveau d'une zone correspondant au mécanisme de libération de pression (6), et l'élément de collecte de liquide (110) est fourni dans la deuxième partie de réception (161).

14. Appareil électrique, comprenant la batterie (200) selon l'une quelconque des revendications 1 à 13, dans lequel la batterie (200) est conçue pour fournir de l'énergie électrique.

15. Procédé préparation de la batterie selon l'une quelconque des revendications 1 à 13, comprenant les étapes consistant à :
fournir une cellule de batterie (400) ;
fournir une boîte (201, 202), la boîte (201, 202) étant conçue pour recevoir la cellule de batterie (400) ;
fournir un tuyau (100), le tuyau (100) étant conçu pour condenser un gaz à l'intérieur de la boîte pour former un condensat ; et
fournir un élément de collecte de liquide (110), l'élément de collecte de liquide (110) étant fourni entre la cellule de batterie (400) et le tuyau (100), l'élément de collecte de liquide (110) étant pourvu d'une première partie de réception qui fait face au tuyau (100), et la première partie de réception étant conçue pour collecter le condensat.
